# EUROPÄISCHE PATENTSCHRIFT

(11) **EP 1 308 325 B1**
(45) Veröffentlichungstag und Bekanntmachung des Hinweises auf die Patenterteilung: **26.04.2006**
(21) Anmeldenummer: 02024421.6
(22) Anmeldetag: 28.10.2002
(51) Int. Cl.: B60H 1/00

(54) **Luftstromschalteinrichtung**
Air flow switching device
Dispositif de commutation du flux d'air

(30) Priorität: 02.11.2001 DE 10154027
(43) Veröffentlichungstag der Anmeldung: 07.05.2003
(73) Patentinhaber: Behr GmbH & Co. KG, 70469 Stuttgart (DE)
(72) Erfinder: Komowski, Michael, Dipl. Ing., 71265 Weil der Stadt, Merklingent (DE)
(74) Vertreter: Grauel, Andreas

(56) Entgegenhaltungen:
- EP-A- 0 858 919
- DE-A- 19 915 966
- US-A1- 2001 012 756
- US-B1- 6 203 420

## Beschreibung

Die vorliegende Erfindung betrifft eine Luftstromschalteinrichtung zum Schalten einer einen ersten Luftkanal mit einem zweiten Luftkanal und einem dritten Luftkanal verbindenden Verbindungsöffnung, insbesondere in einer Heizungs-, Lüftungs- oder Klimaanlage für den Innenraum eines Fahrzeugs.

Eine derartige Luftstromschalteinrichtung kann bei einer Heizungs-, Lüftungs- oder Klimaanlage eines Fahrzeugs z.B. dazu verwendet werden, bei einem dem Fahrzeuginnenraum zugeführten Luftstrom den Anteil an aus der Umgebung des Fahrzeugs angesaugter Frischluft und den Anteil an aus dem Fahrzeuginnenraum angesaugter Umluft einzustellen. Beispielsweise dient der erste Luftkanal zur Luftzuführung in den Fahrzeuginnenraum, während über den zweiten Luftkanal Frischluft und über den dritten Luftkanal Umluft zugeführt werden. Zum Schalten der Verbindungsöffnung weist die Luftstromschalteinrichtung z.B. eine um eine Schwenkachse schwenkbar gelagerte Schaltklappe auf, die so gelagert und angeordnet ist, daß sie zwischen einer ersten Endstellung, in welcher der erste Luftkanal mit dem zweiten Luftkanal kommuniziert und der dritte Luftkanal gesperrt ist, und einer zweiten Endstellung verstellbar ist, in welcher der erste Luftkanal mit dem dritten Luftkanal kommuniziert und der zweite Luftkanal gesperrt ist. Darüber hinaus ist mit der Schaltklappe wenigstens eine Zwischenstellung einstellbar, die zwischen den Endstellungen liegt und in welcher der erste Luftkanal sowohl mit dem zweiten Luftkanal als auch mit dem dritten Luftkanal mehr oder weniger kommuniziert, wobei die Schaltklappe so auszugestalten, daß ihr Querschnitt einen Kreissegmentabschnitt besitzt und so zu lagern, daß der Kreismittelpunkt dieses Kreissegmentabschnitts mit der Schwenkachse der Schaltklappe zusammenfällt.

Aus der DE 1991 5666A1 ist eine Schaltklappe bekannt, die die Merkmale des Obergegriffs von Anspruch 1 offenbart.

Die vorliegende Erfindung beschäftigt sich mit dem Problem, für eine Luftstromschalteinrichtung einen Weg zur Erzielung einer besonders kompakten Bauweise aufzuzeigen.

Dieses Problem wird erfindungsgemäß durch eine Luftstromschalteinrichtung mit den Merkmalen des Anspruchs 1 gelöst. Vorteilhafte Ausführungsformen sind Gegenstand der abhängigen Ansprüche.

Die Erfindung beruht auf dem allgemeinen Gedanken, der Kreisbogensegmentabschnitt des Schaltklappenquerschnitts über weniger als 90° erstrecken, wobei dann der Kreisbogensegmentabschnitt im Querschnitt der Schaltklappe an beiden Seiten jeweils tangential in einen geradlinigen Endabschnitt übergeht. Durch diese Bauweise kann durch eine entsprechende Anordnung der Schaltklappe die Strömungsgeschwindigkeit bei der Durchströmung der Verbindungsöffnung reduziert werden, wodurch nachteilige Toträume im ersten Luftkanal verkleinert bzw. vermieden werden. Dementsprechend kann durch diese Bauweise die Durchströmung der Luftstromschalteinrichtung verbessert werden.

Bei einer besonderen Ausführungsform können die Luftkanäle im Bereich der Verbindungsöffnung bezüglich einer die Verbindungsöffnung mittig und senkrecht durchsetzenden Symmetrieebene spiegelsymmetrisch ausgebildet sein. Bei einer derartigen Bauweise ist es zweckmäßig, die Schwenkachse der Schaltklappe in diese Symmetrieebene zu legen. Auf diese Weise ist die Strömungsführung in den beiden Endstellungen ebenfalls spiegelsymmetrisch und insoweit strömungstechnisch quasi identisch. Dementsprechend können der zweite Luftkanal und der dritte Luftkanal in den Endstellungen gleichartig mit dem ersten Luftkanal kommunizieren.

Die kompakte Bauweise der Luftstromschalteinrichtung wird auch dadurch unterstützt, daß sich die Verbindungsöffnung im wesentlichen in einer Ebene erstreckt und daß sich die Schwenkachse der Schaltklappe parallel zu dieser Verbindungsebene erstreckt und in oder an der Verbindungsöffnungsebene liegt.

Entsprechend einer Weiterbildung können der zweite Luftkanal und der dritte Luftkanal gegenüber der Verbindungsöffnung einen gemeinsamen Kanalabschnitt aufweisen, der einen ebenen Wandabschnitt besitzt, der parallel zu einer Ebene verläuft, in der die Verbindungsöffnung liegt. Bei einer derartigen Ausführungsform ist es vorteilhaft, die Schaltklappe so auszubilden und anzuordnen, daß in jeder Endstellung einer ihrer Endabschnitte parallel zum Wandabschnitt verläuft. Es ist klar, daß zur Erzielung einer kompakten Bauweise die Endabschnitt in der Endstellung der Schaltklappe am oder nahe am Wandabschnitt verlaufen. Dementsprechend unterstützen die vorgeschlagenen Merkmale die kompakte Bauweise der Luftstromschalteinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig.1**: eine Schnittansicht auf eine erfindungsgemäße Luftstromschalteinrichtung bei einer ersten Endstellung einer Schaltklappe bei einer ersten Ausführungsform,
- **Fig. 2**: eine Schnittansicht auf die Luftstromschalteinrichtung nach der Erfindung bei der ersten Endstellung der Schaltklappe, jedoch bei einer anderen Ausführungsform,
- **Fig. 3**: eine Ansicht wie in Fig. 2, jedoch bei einer Zwischenstellung der Schaltklappe, und
- **Fig. 4**: eine Ansicht wie in Fig. 2, jedoch bei einer zweiten Endstellung der Schaltklappe.

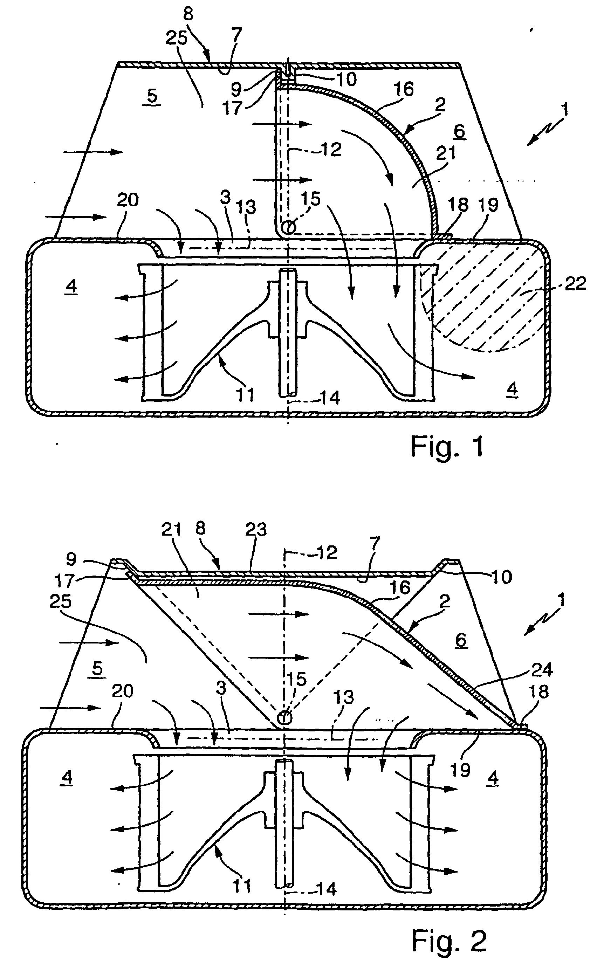

Entsprechend den Fig. 1 bis 4 umfaßt eine Luftstromschalteinrichtung 1 nach der Erfindung eine Schaltklappe 2, die im Bereich einer Verbindungsöffnung 3 angeordnet ist. Die Luftstromschalteinrichtung 1 kann beispielsweise in einer Heizungs-, Lüftungs- oder Klimaanlage für den Innenraum eines Fahrzeugs angeordnet sein oder einen Bestandteil einer solchen Anlage bilden.

Über diese Verbindungsöffnung 3 ist ein in den Figuren unten dargestellter erster Luftkanal 4 mit zwei in den Figuren oben dargestellten Luftkanälen, nämlich mit einem links dargestellten zweiten Luftkanal 5 und mit einem rechts dargestellten dritten Luftkanal 6 verbunden. Im Bereich der Verbindungsöffnung 3 weisen der zweite Luftkanal 5 und der dritte Luftkanal 6 einen gemeinsamen Kanalabschnitt 8 auf, der gegenüber der Verbindungsöffnung 4 einen gemeinsamen Wandabschnitt 7 besitzt. Von diesem Wandabschnitt 7 stehen zwei Anlagekanten, nämlich eine erste Anlagekante 9 und eine zweite Anlagekante 10, ab, die in das Innere des Kanalabschnitts 8 hineinragen. Dabei ist die links dargestellte erste Anlagekante 9 dem zweiten Luftkanal 5 zugewandt, während die rechts dargestellt zweite Anlagekante 10 dem dritten Luftkanal 6 zugewandt ist.

Die Schaltklappe 2 weist an ihren axialen Enden jeweils eine Seitenwange 21 auf, die sich vorzugsweise quer zur Schwenkachse 15 erstrecken und über die die Schaltklappe 2 z.B. am gemeinsamen Kanalabschnitt 8 gelagert ist.

Während die Schaltklappe 2 im gemeinsamen Kanalabschnitt 8 des zweiten Luftkanal 5 und des dritten Luftkanals 6 angeordnet ist, ist im ersten Luftkanal 4 ein Gebläse 11, insbesondere ein Radialgebläse, untergebracht, das bei den hier gezeigten Ausführungsformen unmittelbar an die Verbindungsöffnung 3 angrenzt.

In den Fig. 1 und 2 ist exemplarisch eine bevorzugte Durchströmungssituation der Luftstromschalteinrichtung 1 durch entsprechende Pfeile symbolisch dargestellt. Demzufolge wird eine Ausführungsform bevorzugt, bei der die Schaltklappe 2 stromauf der Verbindungsöffnung 3 angeordnet ist, während das die Strömung erzeugende Gebläse 11 stromab der Verbindungsöffnung 3 angeordnet ist.

Wie aus den Figuren hervorgeht, sind die Luftkanäle 4, 5, 6 zumindest jedoch der zweite Luftkanal 5 und der dritte Luftkanal 6 im Bereich der Verbindungsöffnung 3 spiegelsymmetrisch zu einer Symmetrieebene 12 ausgebildet, welche die Verbindungsöffnung 3 mittig durchsetzt. Auch die Verbindungsöffnung 3 ist spiegelsymmetrisch zur Symmetrieebene 12 ausgebildet, so daß die Verbindungsöffnung 3 im wesentlichen in einer Verbindungsöffnungsebene 13 liegt, die senkrecht zur Symmetrieebene 12 verläuft.

Zur Erzielung einer kompakten Bauweise ist das Gebläse 11 so im ersten Luftkanal 4 angeordnet, daß seine Rotationsachse 14 in der Symmetrieebene 12 liegt und senkrecht zur Verbindungsöffnungsebene 13 verläuft. Des weiteren ist die Schaltklappe 2 so im gemeinsamen Kanalabschnitt 8 angeordnet, daß eine Schwenkachse 15, um welche die Schaltklappe 2 schwenkverstellbar gelagert ist, ebenfalls in der Symmetrieebene 12 liegt. Außerdem erstreckt sich die Schwenkachse 15 der Schaltklappe 2 parallel zur Verbindungsöffnungsebene 13 und liegt relativ nahe an dieser Verbindungsöffnungsebene 13. Der Wandabschnitt 7 des gemeinsamen Kanalabschnitts 8 verläuft parallel zur Verbindungsöffnungsebene 13.

Die Schaltklappe 2 besitzt quer zu ihrer Schwenkachse 15 einen Querschnitt der einen Kreissegmentabschnitt 16 umfaßt. Der Kreissegmentabschnitt 16 ist dabei zur Schwenkachse 15 der Schaltklappe 2 hin konkav gewölbt. Erfindungsgemäß sind die Dimensionierung und die Lagerung der Schaltklappe 2 so aufeinander abgestimmt, daß der Kreismittelpunkt des Kreissegmentabschnitts 16 auf der Schwenkachse 15 der Schwenkklappe 2 liegt. Des weiteren sind die Dimensionierung der Schaltklappe 2 und die Dimensionierung der Verbindungsöffnung 3 so aufeinander abgestimmt, daß der Kreisdurchmesser des Kreissegmentabschnitts 16 der Schaltklappe 2 etwa gleich groß ist wie die quer zur Schwenkachse 15 gemessene Öffnungsweite der Verbindungsöffnung 3. Diese Bauweise führt zu einem besonders kompakten Aufbau der Luftstromschalteinrichtung 1.

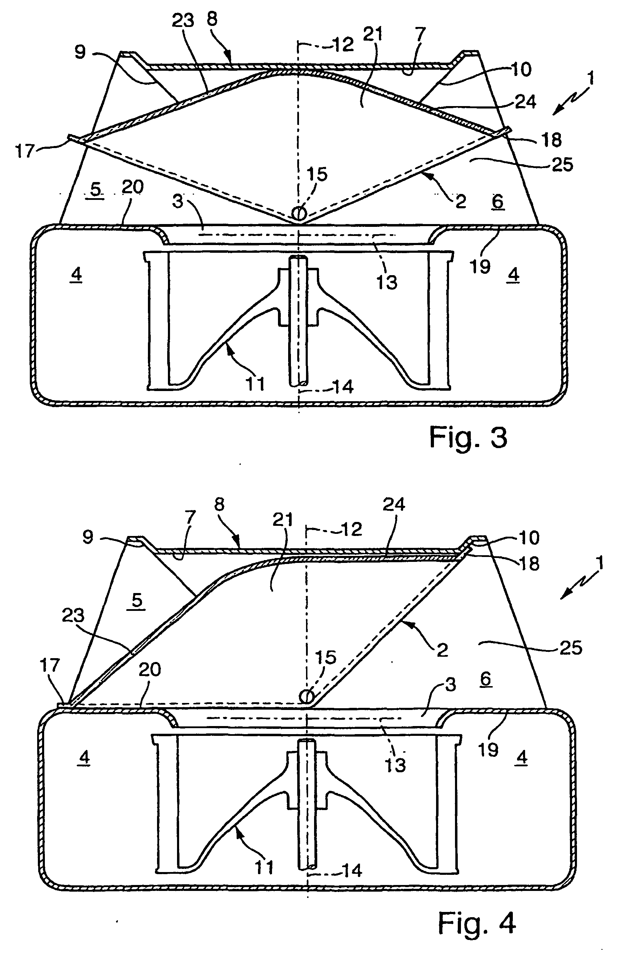

Die Schaltklappe 2 weist im Querschnitt an ihren bezüglich der Schwenkbewegung stirnseitigen Enden jeweils eine Anschlagleiste auf, nämlich eine erste Anschlagleiste 17 und eine zweite Anschlagleiste 18. Die links dargestellte erste Anschlagleiste 17 wirkt in der in den Figuren 1 und 2 gezeigten ersten Endstellung der Schaltklappe 2 mit der ersten Anlagekante 9 zusammen und liegt an dieser an, während die rechts dargestellte zweite Anschlagleiste 18 der zweiten Anlagekante 10 zugeordnet ist und in der in Fig. 4 dargestellten zweiten Endstellung der Schaltklappe 2 an der zweiten Anlagekante 10 zur Anlage kommt. Die Dimensionierung und Anordnung der Schaltklappe 2 ist außerdem so gewählt, daß die zweite Anschlagleiste 18 in der ersten Endstellung der Schaltklappe 2 gemäß den Fig. 1 und 2 an einem Wandabschnitt 19 des dritten Luftkanals 6 anliegt, der an die Verbindungsöffnung 3 angrenzt. In entsprechender Weise liegt in der zweiten Endstellung der Schaltklappe 2 gemäß Fig. 4 die erste Anschlagleiste 17 an einem Wandabschnitt 20 des zweiten Luftkanals 5 an, der ebenfalls an die Verbindungsöffnung 3 angrenzt.

Die Anschlagleisten 17 und 18 können in axialer Richtung über die Seitenwangen 21 der Schaltklappe 2 vorstehen. Ebenso können die Anlagekanten 9 und 10 im Bereich der Seitenwangen 21 jeweils an einer der jeweiligen Seitenwange 21 gegenüberliegenden Seitenwand 25 des Kanalabschnitts 8 ausgebildet sein und zur gegenüberliegenden Seitenwange 21 abstehen. In den Endstellungen der Schaltklappe 2 kommen dann die axialen Abschnitte der Anschlagleisten 17 und 18 an den Anlagekanten 9 und 10 im Bereich dieser Seitenwand 25 zur Anlage.

Die miteinander zusammenwirkenden Anschlagleisten 17, 18 und Anlagekanten 9, 10 definieren einerseits die Endstellungen der Schaltklappe 2 und bilden andererseits hinreichende Abdichtungen gegenüber Fehlströmungen.

Bei der ersten Ausführungsform entsprechend Fig. 1 erstreckt sich der Kreissegmentabschnitt 16 des Schaltklappenquerschnitts etwa über 90°. Bei dieser Ausführungsform sind außerdem die beiden Anschlagleisten 17 und 18 unmittelbar an den stirnseitigen Enden des Kreissegmentabschnitts 16 ausgebildet. Die Schaltklappe 2 ist bei dieser Ausführungsform zwischen ihren Endstellung etwa um 90° verschwenkbar. Bei der in Fig. 1 wiedergegebenen ersten Endstellung der Schaltklappe 2 kommuniziert der zweite Luftkanal 5 mit dem ersten Luftkanal 4, während der dritte Luftkanal 6 durch die Schaltklappe 2 gesperrt ist. Bei der exemplarisch dargestellten und durch Pfeile symbolisierten Strömung ergibt sich durch den Kreisbogenabschnitt 16 eine relativ starke Umlenkung der Strömung. In der Nähe der Kreisbogenabschnitts 16 kann daher die Strömungsgeschwindigkeit, mit der die Strömung durch die Verbindungsöffnung 3 hindurchtritt, so groß werden, daß sich im ersten Luftkanal 4 ein Totvolumen 22 ausbilden kann.

Bei der zweiten Ausführungsform entsprechend den Fig. 2 bis 4 ist der Kreisbogenabschnitt 16 des Schaltklappenquerschnitts deutlich kleiner als 90° ausgebildet. Beispielsweise erstreckt sich der Kreisbogenabschnitt 16 hier etwa über einen Kreisbogen von etwa 40° bis 50°. Bei dieser Ausführungsform ist der Kreissegmentabschnitt 16 im Querschnitt der Schaltklappe 2 an beiden Seiten jeweils durch einen Endabschnitt, nämlich durch einen ersten Endabschnitt 23 und einen zweiten Endabschnitt 24, verlängert. Die beiden Endabschnitte 23 sind im Querschnitt der Schaltklappe 2 geradlinig ausgebildet und gehen tangential in den Kreissegmentabschnitt 16 über. Im übrigen erstrecken sich auch die Endabschnitte 23 und 24 wie der Kreissegmentabschnitt 16 parallel zur Schwenkachse 15 der Schaltklappe 2. Die Dimensionierung der Endabschnitte 23, 24 und des Kreissegmentabschnitts 16 sowie die Positionierung der Schaltklappe 2 sind so aufeinander abgestimmt, daß die Schaltklappe 2 zwischen ihren beiden Endstellungen gemäß den Fig. 2 und 4 etwa um 45° verschwenkt. Die Anschlagleisten 17 und 18 sind an den Endabschnitten 23 und 24 ausgebildet.

Bei der hier gezeigten bevorzugten Variante der zweiten Ausführungsform ist im Querschnitt der Schaltklappe 2 die tangentiale Erstreckung der Endabschnitte 23 und 24 jeweils etwa halb so groß wie die quer zur Schwenkachse 5 gemessene Öffnungsweite der Verbindungsöffnung 3. Dies hat zur Folge, daß in den Endstellungen der Schaltklappe 2 die entlang der Innenkontur der Schaltklappe 2 abgelenkte Strömung im Bereich des jeweils stromab liegenden Endabschnitts 23 bzw. 24 erneut in Richtung Verbindungsöffnung 3 umgelenkt wird, wodurch die Strömungsgeschwindigkeit, mit der die Strömung die Verbindungsöffnung 3 durchdringt in diesem Bereich reduziert wird. Diese Bauweise hat entsprechend der in Fig. 2 exemplarisch wiedergegebenen Durchströmungssituation in der Luftstromschalteinrichtung 1 zur Folge, daß sich im Unterschied zu der Ausgestaltung gemäß Fig. 1 kein derartiges Totvolumen 22 im ersten Luftkanal 4 ausbildet.

Des weiteren ist die Schaltklappe 2 so ausgebildet, daß in jeder Endstellung einer ihrer Endabschnitte 23 und 24 parallel zum gemeinsamen Wandabschnitt 7 verläuft, wodurch zum einen eine geringe Bauhöhe erreicht wird und zum andere eine günstige Strömungsumlenkung erfolgt.

Bei der ersten Endstellung der Schaltklappe 2 gemäß den Fig. 1 und 2 kommuniziert der erste Luftkanal 4 über die Verbindungsöffnung 3 mit dem zweiten Luftkanal 5 während die Schaltklappe 2 den dritten Luftkanal 6 gegenüber der Verbindungsöffnung 3 und gegenüber dem zweiten Luftkanal 5 sperrt. Entsprechendes gilt für die zweite Endstellung gemäß Fig. 4. Dort kommuniziert der erste Luftkanal 4 über die Verbindungsöffnung 3 mit dem dritten Luftkanal 6, während der zweite Luftkanal 5 von der Schaltklappe 2 verschlossen ist. In Fig. 3 ist exemplarisch eine zwischen den beiden Endstellungen liegende Zwischenstellung der Schaltklappe 2 dargestellt, in welcher der erste Luftkanal 4 über die Verbindungsöffnung 3 sowohl mit dem zweiten Luftkanal 5 als auch mit dem dritten Luftkanal 6 kommuniziert.

Sofern die Luftstromschalteinrichtung 1 einen Bestandteil einer Heizungs-, Lüftungs- oder Klimaanlage eines Fahrzeugs bildet, kann der erste Luftkanal 4 zur Luftzuführung in den Fahrzeuginnenraum dienen, während über den zweiten Luftkanal 5 beispielsweise Frischluft aus der Umgebung des Fahrzeugs herangeführt wird und über den dritten Luftkanal 6 Umluft aus dem Fahrzeuginnenraum angesaugt wird. Durch die Schaltstellung der Schaltklappe 2 kann das jeweils gewünschte Mischungsverhältnis zwischen Frischluft und Umluft für die in den Fahrzeuginnenraum eingeblasene Zuluft eingestellt werden.

### Bezugszeichenliste

- 1: Luftstromschalteinrichtung
- 2: Schaltklappe
- 3: Verbindungsöffnung
- 4: erster Luftkanal
- 5: zweiter Luftkanal
- 6: dritter Luftkanal
- 7: Wandabschnitt
- 8: Kanalabschnitt
- 9: erste Anlagekante
- 10: zweite Anlagekante
- 11: Gebläse
- 12: Symmetrieebene
- 13: Verbindungsöffnungsebene
- 14: Rotationsachse von 11
- 15: Schwenkachse von 2
- 16: Kreissegmentabschnitt von 2
- 17: erste Anschlagleiste
- 18: zweite Anschlagleiste
- 19: Wandabschnitt von 6
- 20: Wandabschnitt von 5
- 21: Seitenwange von 2
- 22: Totvolumen
- 23: erster Endabschnitt von 2
- 24: zweiter Endabschnitt von 2
- 25: Seitenwand von 8

## Patentansprüche

1. Luftstromschalteinrichtung zum Schalten einer einen ersten Luftkanal (4) mit einem zweiten Luftkanal (5) und einem dritten Luftkanal (6) verbindenden Verbindungsöffnung (3), insbesondere in einer Heizungs-, Lüftungs- oder Klimaanlage für den Innenraum eines Fahrzeugs,
- mit einer um eine Schwenkachse (15) schwenkbar gelagerten Schaltklappe (2), die quer zur Schwenkachse (15) einen Querschnitt mit einem zur Schwenkachse (15) hin konkaven Kreissegmentabschnitt (16) aufweist,
- wobei die Schaltklappe (2) so angeordnet ist, daß in einer ersten Endstellung der Schaltklappe (2) der erste Luftkanal (4) mit dem zweiten Luftkanal (5) kommuniziert, während der dritte Luftkanal (6) gesperrt ist, in einer zweiten Endstellung der Schaltklappe der erste Luftkanal (4) mit dem dritten Luftkanal (6) kommuniziert, während der zweite Luftkanal (5) gesperrt ist, und in wenigstens einer zwischen den Endstellungen liegenden Zwischenstellung der Schaltklappe (2) der erste Luftkanal (4) sowohl mit dem zweiten Luftkanal (5) als auch mit dem dritten Luftkanal (6) mehr oder weniger kommuniziert,
- wobei die Schaltklappe (2) so gelagert ist, das der Kreismittelpunkt des Kreissegmentabschnitts (16) mit der Schwenkachse (15) zusammenfällt,
**dadurch gekennzeichnet, daß** sich der Kreissegmentabschnitt (16) über einen Kreisbogen von weniger als 90° erstreckt, wobei der Kreissegmentabschnitt (16) im Querschnitt der Schaltklappe (2) an beiden Seiten jeweils tangential in einen geradlinigen Endabschnitt (23, 24) übergeht.

2. Luftstromschalteinrichtung nach Anspruch 1,
**dadurch gekennzeichnet,**
**daß** die Luftkanäle (4, 5, 6) im Bereich der Verbindungsöffnung (3) bezüglich einer die Verbindungsöffnung (3) mittig und senkrecht durchsetzenden Symmetrieebene (12) spiegelsymmetrisch ausgebildet sind und daß die Schwenkachse (15) der Schaltklappe (2) in dieser Symmetrieebene (12) liegt.

3. Luftstromschalteinrichtung nach Anspruch 1 oder 2,
**dadurch gekennzeichnet,**
**daß** sich die Verbindungsöffnung (3) im wesentlichen in einer Ebene (13) erstreckt und daß sich die Schwenkachse (15) der Schaltklappe (2) parallel zu dieser Verbindungsöffnungsebene (13) erstreckt und in oder an der Verbindungsöffnungsebene (13) liegt.

4. Luftstromschalteinrichtung nach einem der vorhergehenden Ansprüche,
**dadurch gekennzeichnet,**
**daß** der zweite Luftkanal (5) und der dritte Luftkanal (6) gegenüber der Verbindungsöffnung (3) einen gemeinsamen Kanalabschnitt (8) aufweisen, der einen ebenen Wandabschnitt (7) aufweist, der parallel zu einer Ebene (13) verläuft, in der die Verbindungsöffnung (3) liegt, wobei die Schaltklappe (2) so ausgebildet und angeordnet ist, daß in jeder Endstellung einer ihrer Endabschnitte (23, 24) parallel zum Wandabschnitt (7) verläuft.

5. Luftstromschalteinrichtung nach einem der vorhergehenden Ansprüche,
**dadurch gekennzeichnet,**
**daß** im Querschnitt der Schaltklappe (2) die tangentiale Erstreckung der Endabschnitte (23, 24) jeweils etwa halb so groß ist wie der Kreisdurchmesser des Kreissegmentabschnitts (16) und/oder wie die quer zur Schwenkachse (15) gemessene Öffnungsweite der Verbindungsöffnung (3).

6. Luftstromschalteinrichtung nach einem der Ansprüche 1 bis 5,
**dadurch gekennzeichnet,**
**daß** im Querschnitt der Schaltklappe (2) der Kreisdurchmesser des Kreissegmentabschnitts (16) etwa gleich groß ist wie die quer zur Schwenkachse (15) gemessene Öffnungsweite der Verbindungsöffnung (3).

7. Luftstromschalteinrichtung nach einem der Ansprüche 1 bis 6,
**dadurch gekennzeichnet,**
**daß** die Schaltklappe (2) im Querschnitt an ihren Enden jeweils eine bezüglich der Schwenkachse (15) radial nach außen abstehende und sich parallel zur Schwenkachse (15) erstreckende Anschlagleiste (17, 18) aufweist und daß in einem gemeinsamen Kanalabschnitt (8) des zweiten Luftkanals (5) und des dritten Luftkanals (6) an einem der Verbindungsöffnung (3) gegenüberliegenden Wandabschnitt (7) eine in den Kanalabschnitt (8) vorstehende Anlagekante (9, 10) ausgebildet ist, wobei in jeder Endstellung der Schaltklappe (2) eine der Anschlagleisten (17, 18) an einer der Anlagekanten (9, 10) anliegt.

8. Luftstromschalteinrichtung nach einem der Ansprüche 1 bis 7,
**dadurch gekennzeichnet,**
**daß** die Schaltklappe (2) an ihren axialen Enden jeweils eine axial nach außen abstehende und sich radial zur Schwenkachse (15) erstreckende Anschlagleiste (17, 18) aufweist und daß in einem gemeinsamen Kanalabschnitt (8) des zweiten Luftkanals (5) und des dritten Luftkanals (6) an der Schaltklappe (2) axial gegenüberliegenden Seitenwänden (25) jeweils eine in den Kanalabschnitt (8) vorstehende Anlagekante (9, 10) ausgebildet ist, wobei in jeder Endstellung der Schaltklappe (2) eine der Anschlagleisten (17, 18) an einer der Anlagekanten (9, 10) anliegt.

9. Luftstromschalteinrichtung nach einem der Ansprüche 1 bis 8,
**dadurch gekennzeichnet,**
**daß** der erste Luftkanal (4) stromab der Verbindungsöffnung (3) angeordnet ist, während der zweite Luftkanal (5), der dritte Luftkanal (6) und die Schaltklappe (2) stromauf der Verbindungsöffnung (3) angeordnet sind.

10. Luftstromschalteinrichtung nach einem der Ansprüche 1 bis 8,
**dadurch gekennzeichnet,**
**daß** in einer Heizungs-, Lüftungs- oder Klimaanlage für den Innenraum eines Fahrzeugs der erste Luftkanal (4) zur Luftzuführung in den Fahrzeuginnenraum, der zweite Luftkanal (5), als Frischluftkanal und der dritte Luftkanal (6) als Umluftkanal dient.

## Claims

1. Air flow switching device for switching a connection opening (3) connecting a first air duct (4) to a second air duct (5) and a third air duct (6), particularly in a heating, ventilating or air-conditioning system for the inner area of a vehicle,
- with a switching valve (2) mounted so as to be pivotable about a pivot axis (15) and having at right angles to the pivot axis (15) a cross-section with a circle segment section (16) which is concave in relation to the pivot axis (15),
- wherein the switching valve (2) is arranged in such a way that in a first end position of the switching valve (2) the first air duct (4) communicates with the second air duct (5) while the third air duct (6) is blocked, in a second end position of the switching valve the first air duct (4) communicates with the third air duct (6) while the second air duct (5) is blocked, and in at least one intermediate position of the switching valve (2) lying between the end positions the first air duct (4) communicates more or less with the second air duct (5) and with the third air duct (6),
- wherein the switching valve (2) is mounted so that the circle middle point of the circle segment section (16) coincides with the pivot axis (15),
**characterised in that** the circle segment section (16) extends over an arc of a circle of less than 90° wherein the circle segment section (16) in the cross-section of the switching valve (2) on both sides runs tangentially into a straight line end section (23, 24).

2. Air flow switching device according to claim 1,
**characterised in that**
the air ducts (4, 5, 6) in the region of the connection opening (3) are formed mirror-symmetrically in relation to a symmetry plane (12) passing centrally and perpendicularly through the connection opening (3), and **in that** the pivot axis (15) of the switching valve (2) lies in this symmetry plane (12).

3. Air flow switching device according to claim 1 or 2,
**characterised in that**
the connection opening (3) extends essentially in a plane (13) and **in that** the pivot axis (15) of the switching valve (2) extends parallel to this connection opening plane (13) and lies in or on the connection opening plane (13).

4. Air flow switching device according to one of the preceding claims,
**characterised in that**
the second air duct (5) and the third air duct (6) have a shared duct section (8) opposing the connection opening (6) which comprises a flat wall section (7) which runs parallel to a plane (15) in which the connection opening (3) lies, wherein the switching valve (2) is formed and arranged in such a way that in each end position one of its end sections (23, 24) runs parallel to the wall section (7).

5. Air flow switching device according to one of the preceding claims,
**characterised in that**
in the cross-section of the switching valve (2) the tangential extension of the end sections (23, 24) is in each case approximately half the size of the circle diameter of the circle segment section (16) and / or of the opening width of the connection opening (3) measured at right angles to the pivot axis (15).

6. Air flow switching device according to one of the claims 1 to 5,
**characterised in that**
in the cross-section of the switching valve (2) the circle diameter of the circle segment section (16) is approximately the same size as the opening width of the connection opening (3) measured at right angles to the pivot axis (15).

7. Air flow switching device according to one of the claims 1 to 6,
**characterised in that**
the switching valve (2) comprises in cross-section at each of its ends a stop strip (17, 18) projecting radially outwards in relation to the pivot axis (15) and extending parallel to the pivot axis (15) and **in that** an abutment edge (9, 10) projecting into the duct section (8) is formed in a shared duct section (8) of the second air duct (5) and the third air duct (6) on a wall section (7) lying opposite the connection opening (3), wherein in each end position of the switching valve (2) one of the stop strips (17, 18) lies against one of the abutment edges (9, 10).

8. Air duct switching device according to one of the claims 1 to 7,
**characterised in that**
the switching valve (2) comprises on each of its axial ends an axially outwardly projecting stop strip (17, 18) extending radially relative to the pivot axis (15) and **in that** in a shared duct section (8) of the second air duct (5) and the third air duct (6) on each of the side walls (25) lying axially opposite the switching valve (2) an abutment edge (9, 10) is formed projecting into the duct section (8) wherein in each end position of the switching valve (2) one of the stop strips (17, 18) lies against one of the abutment edges (9, 10).

9. Air flow switching device according to one of the claims 1 to 8,
**characterised in that**
the first air duct (4) is arranged downstream of the connection opening (3) while the second air duct (5), the third air duct (6) and the switching valve (2) are arranged upstream of the connection opening (3).

10. Air flow switching device according to one of the claims 1 to 8,
**characterised in that**
in a heating, ventilating or air-conditioning system for the inner area of a vehicle the first air duct (4) serves for the air supply into the vehicle inner area, the second air duct (5) serves as a fresh air duct and the third air duct (6) serves as a circulating air duct.

## Revendications

1. Dispositif de commutation du flux d'air pour commuter un orifice de liaison (3) reliant une première canalisation d'air (4) avec une deuxième canalisation d'air (5) et une troisième canalisation d'air (6), notamment dans un système de chauffage, de ventilation ou de climatisation de l'habitacle d'un véhicule,
- avec un clapet de manoeuvre (2) logé de façon pivotante autour d'un axe de pivotement (15) qui, perpendiculairement à l'axe de pivotement (15), comporte une section avec une partie en segment de cercle (16) concave vers l'axe de pivotement (15)
- le clapet de manoeuvre (2) étant disposé de façon à ce que dans une première position extrême du clapet de manoeuvre (2), la première canalisation d'air (4) communique avec la deuxième canalisation d'air (5), alors que la troisième canalisation d'air (6) est fermée, dans une deuxième position extrême du clapet de manoeuvre, la première canalisation d'air (4) communique avec la troisième canalisation d'air (6), alors que la deuxième canalisation d'air (5) est fermée et dans au moins une position intermédiaire du clapet de manoeuvre (2) située entre les positions extrêmes, la première canalisation d'air (4) communique plus ou moins aussi bien avec la deuxième canalisation d'air (5) qu'avec la troisième canalisation d'air (6),
- le clapet de manoeuvre (2) étant logé de façon à ce que le centre du cercle de la partie de segment de cercle (16) coïncide avec l'axe de pivotement (15),
**caractérisé en ce que** la partie de segment de cercle (16) s'étend sur un arc de cercle inférieur à 90°, dans la section transversale du clapet de manoeuvre (2), la partie de segment de cercle (16) passant sur les deux côtés respectivement de façon tangentielle dans une section d'extrémité rectiligne (23, 24).

2. Dispositif de commutation du flux d'air selon la revendication 1,
**caractérisé en ce que** dans la région de l'orifice de liaison (3), les canalisations d'air (4, 5, 6) sont conçues en symétrie spéculaire par rapport à un plan de symétrie (12) traversant l'orifice de liaison (3) à la perpendiculaire en son centre et **en ce que** l'axe de pivotement (15) du clapet de manoeuvre (2) se situe dans ce plan de symétrie (12).

3. Dispositif de commutation du flux d'air selon la revendication 1 ou 2, **caractérisé en ce que** l'orifice de liaison (3) s'étend sensiblement dans un plan (13) et **en ce que** l'axe de pivotement (15) du clapet de manoeuvre (2) s'étend à la parallèle de ce plan de l'orifice de liaison (13) et se situe dans ou sur le plan de l'orifice de liaison (13).

4. Dispositif de commutation du flux d'air selon l'une quelconque des revendications précédentes, **caractérisé en ce que** la deuxième canalisation d'air (5) et la troisième canalisation d'air (6) comportent par rapport à l'orifice de liaison (3) un tronçon de canalisation commun (8) qui comporte un tronçon de paroi plan (7) qui s'étend à la parallèle du plan (13), dans lequel se situe l'orifice de liaison (3), le clapet de manoeuvre (2) étant conçu et disposé de façon à ce que dans chaque position extrême, l'une de ses sections d'extrémité (23, 24) s'étende à la parallèle du tronçon de paroi (7).

5. Dispositif de commutation du flux d'air selon l'une quelconque des revendications précédentes, **caractérisé en ce que** dans la section transversale du clapet de manoeuvre (2), l'extension tangentielle des sections d'extrémité (23, 24) correspond respectivement à la moitié du diamètre du cercle de la partie de segment de cercle (16) et/ou de la largeur d'ouverture de l'orifice de liaison (3), mesurée à la transversale de l'axe de pivotement (15).

6. Dispositif de commutation du flux d'air selon l'une quelconque des revendications 1 à 5, **caractérisé en ce que** dans la section transversale du clapet de manoeuvre (2), le diamètre du cercle de la partie de segment de cercle (16) est approximativement aussi grand que la largeur d'ouverture de l'orifice de liaison (3), mesurée à la transversale de l'axe de pivotement (15).

7. Dispositif de commutation du flux d'air selon l'une quelconque des revendications 1 à 6, **caractérisé en ce qu'**en section transversale, le clapet de manoeuvre (2) comporte sur ses extrémités respectivement une baguette de butée (17, 18) dépassant vers l'extérieur en direction radiale par rapport à l'axe de pivotement (15) et s'étendant à la parallèle de l'axe de pivotement (15) et **en ce qu'**un bord d'appui (9, 10) dépassant dans le tronçon de canalisation (8) est conçu dans un tronçon de canalisation commun (8) à la deuxième canalisation d'air (5) et à la troisième canalisation d'air (6), sur un tronçon de paroi (7) opposé à l'orifice de liaison (3), dans chaque position extrême du clapet de manoeuvre (2), l'une de baguettes de butée (17, 18) s'appliquant sur l'un des bords d'appui (9, 10).

8. Dispositif de commutation du flux d'air selon l'une quelconque des revendications 1 à 7, **caractérisé en ce que** le clapet de manoeuvre (2) présente sur ses extrémités axiales respectivement une baguette de butée (17, 18) dépassant vers l'extérieur et s'étendant en direction radiale par rapport à l'axe de pivotement (15) et **en ce qu'**un bord d'appui (9, 10) dépassant dans le tronçon de canalisation (8) est respectivement conçu dans un tronçon de canalisation commun (8) à la deuxième canalisation d'air (5) et à la troisième canalisation d'air (6), sur les parois latérales (25) axialement opposées au clapet de manoeuvre (2), dans chaque position extrême du clapet de manoeuvre (2), l'une de baguettes de butée (17, 18) s'appliquant sur l'un des bords d'appui (9, 10).

9. Dispositif de commutation du flux d'air selon l'une quelconque des revendications 1 à 8, **caractérisé en ce que** la première canalisation d'air (4) est disposée en aval de l'orifice de liaison (3), alors que la deuxième canalisation d'air (5), la troisième canalisation d'air (6) et le clapet de manoeuvre (2) sont disposés en amont de l'orifice de liaison (3).

10. Dispositif de commutation du flux d'air selon l'une quelconque des revendications 1 à 8, **caractérisé en ce que** dans un système de chauffage, de ventilation ou de climatisation de l'habitable d'un véhicule, la première canalisation d'air (4) sert à alimenter l'air dans l'habitacle du véhicule, la deuxième canalisation d'air (5) fait office de canalisation d'air frais et la troisième canalisation d'air (6) fait office de canalisation de circulation d'air.
